# FASCICULE DE BREVET EUROPEEN

(11) **EP 1 954 463 B1**
(45) Date de publication et mention de la délivrance du brevet: **24.03.2010**
(21) Numéro de dépôt: 06806316.3
(22) Date de dépôt: 17.10.2006
(51) Int. Cl.: B60C 13/00, B29D 30/72, B29C 33/42

(54) **PNEUMATIQUE AVEC MARQUAGE OFFRANT UNE MEILLEURE VISIBILITE' ET PROCEDE' DE MARQUAGE**
REIFEN MIT EINER MARKIERUNG MIT VERBESSERTER SICHTBARKEIT UND MARKIERUNGSVERFAHREN
MARKED TYRE WITH IMPROVED VISIBILITY AND MARKING METHOD

(30) Priorité: 21.10.2005 FR 0510848
(43) Date de publication de la demande: 13.08.2008
(73) Titulaire: Societe de Technologie Michelin, 63000 Clermont-Ferrand (FR); Michelin Recherche et Technique S.A., 1763 Granges-Paccot (CH)
(72) Inventeur: PATURLE, Antoine, F-63430 Pont du Château (FR)
(74) Mandataire: Diernaz, Christian
(86) Numéro de dépôt international: PCT/EP2006/009980
(87) Numéro de publication internationale: WO 2007/045425

(56) Documents cités:
- EP-A- 0 416 846
- EP-A- 1 063 071
- JP-A- 6 106 920
- US-A- 4 444 713
- US-A1- 2003 230 370
- US-A1- 2004 187 997

## Description

L'invention concerne un marquage ainsi qu'un procédé de réalisation d'un tel marquage d'un pneumatique en matière caoutchoutique.

Dans le domaine du marquage des articles, on connaît l'emploi de pièces rapportées sur ces articles, ces pièces constituant un marquage ayant pour finalité d'être facilement visibles par un observateur. Ce type de marquage nécessite l'emploi d'un support et d'un adhésif entre le support et l'article. On comprend aisément que ce type de marquage, bien qu'assez simple, soit assez difficile à mettre en oeuvre en particulier si on veut tenir compte des contraintes d'usage de l'article comportant un tel marquage.

Dans un autre type de marquage, on procède à la réalisation du marquage directement sur l'article lui même par exemple en usinant ledit marquage sur la surface de l'article ou, lorsque l'article est obtenu par moulage dans un moule, par l'usinage du marquage sur le moule de manière à pouvoir le reproduire pendant le moulage sur l'article.

Dans une autre variante de réalisation, un motif de marquage est réalisé sur un support, ledit support étant ensuite placé dans un logement sur le moule.

Il est recherché un type de marquage intégré à l'article sur lequel il est fait et qui présente une visibilité améliorée par rapport aux marquages connus et qui est de plus suffisamment pérenne pour être visible après usage de l'article.

Le document US 4444713 - A décrit un pneumatique avec un marquage ayant une certaine finition superficielle sur un fond avec une finition différente.

Dans le pneumatique décrit dans le document EP 1063071 - A le motif de marquage est obtenu par une alternance de micro-sommets et de micro-rainures.

Le document US 2004/0187997 - A décrit un pneumatique comportant un motif décoratif ou un marquage obtenus par un réseau de diffraction de la lumière formé par une pluralité de nervures out rainures disposées parallèlement les unes aux autres.

Le document US 2003/0230370 - A décrit un pneumatique et un moule pour sa fabrication, ledit pneumatique ayant sur les flancs une finition superficiel de moins de 380 microns.

Le document US 2003/0230370 - A décrit la fabrication d'une feuille rétroréflective ayant une pluralité d'éléments prismatiques.

La présente invention se réfère à un pneumatique en matériau caoutchoutique comme défini dans la revendication 1.

La présente invention se réfère aussi à un procédé de fabrication d'un pneumatique en matériau caoutchoutique selon les étapes définies dans la revendication 9 et dans la revendication 11.

Des formes avantageuses de l'invention font l'objet des revendications dépendantes.

Le procédé de moulage selon l'invention permet d'obtenir un marquage qui résout les problèmes évoqués plus haut en relation avec l'art antérieur et qui, tout en étant plus pérenne, présente un très fort contraste sur une surface de même couleur (cette surface pouvant être de couleur noire ou bien de toute autre couleur).

Selon l'invention, on réalise un motif de contraste élevé sur un article obtenu par moulage, en réalisant à l'emplacement du motif sur une surface du moule, une pluralité de trous de section moyenne comprise entre 0,003 et 0,06 mm², de manière à générer le motif désiré selon une densité appropriée à la réalisation du motif. Préférentiellement, cette densité est au moins égale à 5 trous par mm² de surface, lesdits trous ayant une profondeur au moins égale à 0,1 mm.

Grâce à ce procédé, le moule de l'article comprend une série d'orifices à l'intérieur desquels la matière de l'article va être moulé de façon à créer sur ledit article une pluralité de brins ou poils sensiblement parallèles les uns aux autres et faisant saillie sur la surface de l'article pour constituer de manière visible avec un fort contraste le motif voulu.

Grâce au marquage selon l'invention, il est possible avec la même couleur que celle de l'article sur lequel le marquage est réalisé d'avoir un marquage de très fort contraste dont la pérennité est assuré par le nombre et la longueur des brins.

Selon une variante du procédé selon l'invention, la densité des trous réalisés sur le moule peut être variable selon des parties différentes d'un motif de manière à créer des effets de variations de couleur permettant ainsi de restituer un motif complexe.

Dans une autre variante de ce procédé, les trous peuvent être réalisés sur un support distinct du moule avant de placer ce support dans un orifice sur le moule ; ceci permet de changer aisément de motif sans avoir à modifier le moule en totalité.

Dans une variante préférentielle du procédé selon l'invention, le perçage des trous est obtenu au moyen d'un faisceau laser.

Le procédé et ses variantes s'appliquent à la fabrication de pneumatiques qu'ils soient de couleur noire ou de toute autre couleur.

L'invention concerne également un marquage réalisé sur une surface d'un pneumatique, ce marquage présentant un très fort contraste par rapport à la couleur de l'article lui-même.

Selon cette invention, un pneumatique ayant au moins une surface visible est pourvu sur au moins une partie de cette surface avec un motif formant un contraste marqué par rapport à la surface de l'article, ce motif étant **caractérisé en ce qu**'il comprend une pluralité de brins répartis sur la totalité dudit motif, chaque brin faisant saillie sur ladite surface et ayant une section moyenne comprise entre 0,003 et 0,06 mm².

Préférentiellement, la densité des brins sur la surface du motif est au moins égale à cinq brins par mm² de manière à réduire le plus possible toute surface de fond entre les brins et notamment toute surface plane de l'article entre les brins et ainsi renforcer le contraste du motif. Avantageusement la densité est supérieure à 15 brins par mm² et encore plus préférentiellement supérieure à 100 brins par mm².

Préférentiellement, la hauteur moyenne des brins est au moins égale à 0,1 mm de manière à assurer une plus grande pérennité au motif ainsi qu'un contraste renforcé.

De façon avantageuse, la section de chaque brin diminue en allant de la surface de l'article vers l'extérieur, c'est-à-dire de la base du brin vers l'extrémité dudit brin. De cette manière, on réduit les surfaces sensiblement parallèles à la surface de base de l'article, ce qui se traduit par un contraste renforcé. Dans le même objectif, il est judicieux de choisir des géométries de section des brins appropriées, notamment de forme polygonale, pour que les surfaces résiduelles entre les bases desdits brins sur la surface de l'article soient réduites. Ceci est atteint quand les bases sont en contact entre elles.

Par ailleurs, le motif réalisé peut reproduire un motif complexe c'est-à-dire non plus seulement un contour délimitant une surface de couleur contrastant avec la couleur de base de l'article mais un motif montrant des parties de contrastes différents à l'intérieur même dudit motif. Ainsi, l'article peut comporter la reproduction d'une photographie montrant des dégradés d'une même couleur, ces dégradés faisant contraste avec la couleur de base de l'article. Dans ce but, les brins formant le motif ont des hauteurs variables et des géométries de section de forme variable et ils sont répartis de façon appropriée pour obtenir des dégradés de couleur. Il est ainsi possible de gérer le contraste selon un motif donné.

Le marquage selon l'invention trouve une application très intéressante dans le domaine des pneumatiques obtenus par moulage dans un moule ayant à la fois la fonction de donner la forme au pneumatique et de réaliser la vulcanisation des matériaux caoutchoutiques.

Dans le cas d'un pneumatique en matériau caoutchoutique, ce pneumatique peut comporter un motif occupant la totalité d'une surface visible de manière à réaliser un renforcement de la visibilité de cette surface et conférer ainsi une meilleure impression d'ensemble au pneumatique. L'ensemble de cette surface comprend une pluralité de brins de matériau caoutchoutique de même nature que le pneumatique dont les dimensions et densité sont choisis en fonction de l'effet recherché.

Il est important de relever qu'outre le renforcement de la visibilité par un contraste et une luminance augmentées, le motif selon l'invention confère à l'article sur lequel il est réalisé un toucher particulièrement agréable, du type "velours" ce qui ajoute au premier effet un effet intéressant pour grand nombre de produits industriels, comme par exemple des planches de tableau de bord de véhicules.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre une vue partielle d'un article comportant sur une de ses surfaces un marquage selon l'invention ;

La figure 2 montre une partie d'un moule métallique pour mouler l'article de la figure 1 ;

La figure 3 montre une vue en coupe selon la ligne A-A prise sur la figure 2 ;

La figure 4 montre une vue en coupe d'une variante de moule selon l'invention ;

La figure 5 montre une section d'un pneumatique ainsi qu'une vue locale de la surface dudit pneumatique.

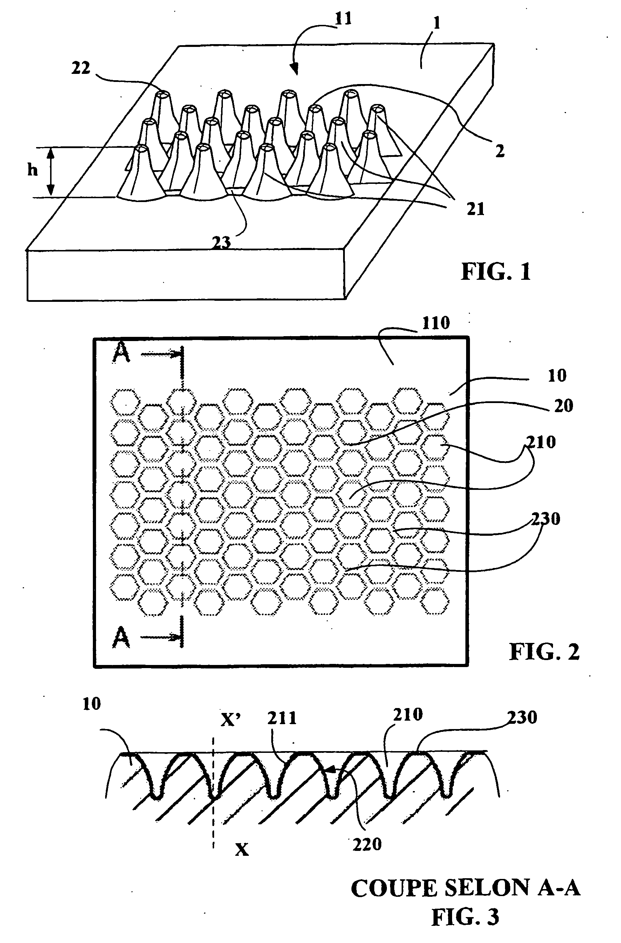

La figure 1 montre un article 1 dont une surface externe 11 est pourvue d'un marquage 2 particulièrement visible et de fort contraste sous toute incidence de la lumière grâce à la mise en oeuvre de l'invention.

Ce marquage 2 est formé par une pluralité de brins 21 faisant saillie sur la surface 11 de l'article 1. Le contour de l'ensemble de ces brins 21 sur la surface de l'article correspond précisément au contour du marquage 2. Chaque brin 21 s'appuie sur une base sur la surface 11 de l'article et présente une section qui décroît progressivement en s'éloignant de ladite surface 11. Chaque brin 21 a une hauteur h égale à 0.12 mm et a une section à la base équivalente à celle d'un disque de diamètre 0.15 mm (soit une section égale à environ 0,018 mm²). Par ailleurs, chaque brin 21 se termine à son extrémité la plus éloignée de la surface de l'article par une partie 22 de forme bombée pour éviter une forme plane.

Par ailleurs, les parties 23 de surface entre les bases des brins 21 sont les plus réduites possibles afin de limiter le plus possible les surfaces planes sensiblement parallèles à la surface 11 de l'article. Pour cela, la densité, c'est-à-dire le nombre de brins par unité de surface de l'article, est dans le cas présent égale à sensiblement 55 brins par millimètres carrés (mm²).

La figure 2 montre une partie d'un moule métallique 10 pour mouler un article semblable à celui de la figure 1, par injection de matière à l'intérieur dudit moule 10. Sur une partie de ce moule, il est réalisé un motif 20 de forme générale rectangulaire. À l'intérieur de ce motif 20, on a réalisé sur la surface 110 du moule une pluralité de cavités 210 (formant des trous) de profondeur moyenne égale à 0,12 mm (préférentiellement la profondeur est comprise entre 0,1 et 0,2 mm, mais elle peut être supérieure) et disposés de façon à former une sorte de structure en "nid d'abeille". Cette structure en nid d'abeille est particulièrement intéressant car elle présente l'avantage de réduire les surfaces résiduelles entre les bases des brins moulés et ainsi d'améliorer la visibilité du motif moulé. Ces cavités 210 ont sur la surface 110 du moule 10 une forme hexagonale de dimension moyenne égale à 0,12 mm (préférentiellement 0,1 à 0,2 mm).

Les parties 230 de moule séparant chacune des cavités ont une épaisseur moyenne égale à 0,03 mm sur la surface du moule, cette épaisseur allant progressivement en augmentant avec la profondeur dans le moule. Il est essentiel de réduire le plus possible les distances entre les cavités sur la surface du moule afin de réduire le plus possible les surfaces sensiblement parallèle à la surface moyenne de l'article sur lequel est réalisé le marquage. La surface moyenne de l'article correspond à la surface sous jacente au marquage ; en effet, plus le motif de marquage est formé de surfaces inclinées par rapport à cette surface moyenne et plus la visibilité dudit marquage est améliorée.

L'usinage des cavités 2 est réalisé au moyen d'un laser par passages successifs. À chaque passage, une certaine quantité de matière est enlevée. Le fond de chaque cavité présente un profil en demi sphère ce qui évite à l'extrémité des brins moulés dans ces cavités de présenter des surfaces planes, ce qui accroît encore la visibilité du marquage.

Dans la variante présentée, la forme de chaque cavité présente une symétrie autour d'un axe XX' sensiblement perpendiculaire à la surface du moule comme cela est visible sur la figure 3 représentant une coupe selon une ligne A-A du moule 10 de la figure 2. Chaque cavité 210 réalisée dans le moule présente un profil sensiblement symétrique autour d'un axe XX' perpendiculaire à la surface du moule : ceci signifie que la cavité est obtenue en faisant tourner autour de l'axe XX' le profil 211 visible sur la figure 3. La réduction de la section de chaque cavité 210 est très marquée entre la surface du moule et les deux tiers de la profondeur desdites cavités. Chaque cavité 210 se termine par une partie 220 qui n'est pas plane mais sensiblement hémisphérique.

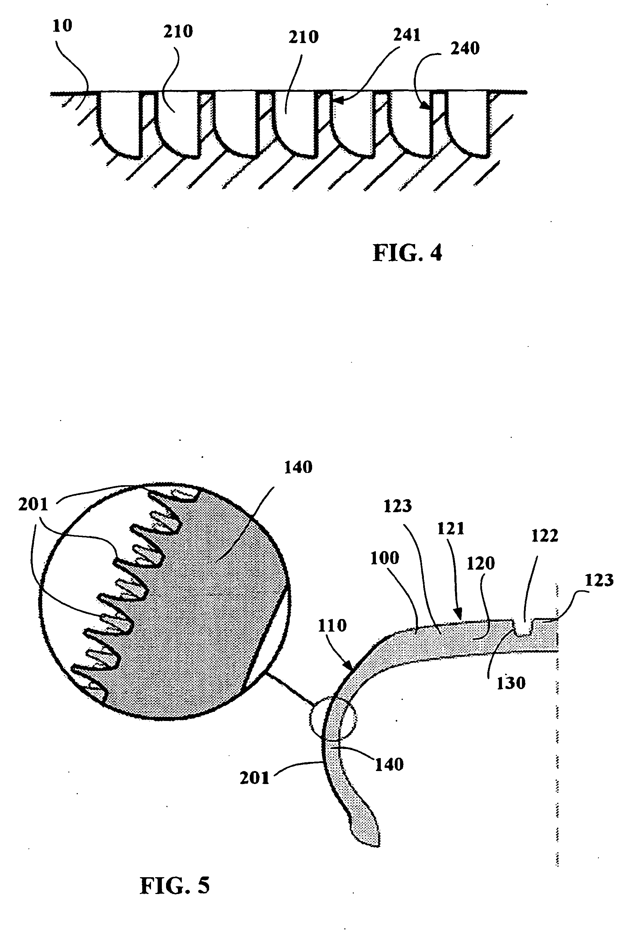

Dans une autre variante présentée en coupe avec la figure 4, la géométrie des cavités 210 est dissymétrique. Chaque cavité présente, dans la profondeur, une forme plane 240 combinée avec une forme sensiblement cylindrique 241 (sur la surface du moule, chaque cavité forme une ouverture comprenant un segment de droite dont les extrémités sont reliées par un arc de cercle). Cette variante permet de créer une variation de contraste du marquage en fonction de la direction d'observation.

Sur la figure 5, on a représenté un pneumatique 100 en caoutchouc de couleur noire, ledit pneumatique 100 comprenant des flancs 140 ayant une surface externe 110 visible lorsque le pneumatique est monté sur une jante de montage.

Ce pneumatique 100 a été moulé dans un moule en plusieurs parties, les parties moulant les flancs 140 du pneumatique étant entièrement pourvues d'une densité élevée (supérieure à 100 brins par mm²) de cavités telles que montrées avec la figure 1. Après moulage du pneumatique 100, les flancs 140 de ce dernier comporte un très grand nombre de brins 201 de forme sensiblement conique qui font saillie sur la surface 110 desdits flancs formant ainsi une sorte de texture, dont la section va en décroissant en s'éloignant de la surface de l'article. Sur cette même figure 5, on montre dans un médaillon un agrandissement localisé de la surface du flanc grâce auquel il est aisé de distinguer la pluralité de brins formant cette texture qui présente l'avantage de renforcer la couleur noire dudit flanc.

Avantageusement, les inscriptions usuelles de dimension du pneumatique et réglementaires sont elles aussi formées avec une texture selon l'invention.

Dans une autre variante, non montrée, ces inscriptions ne sont pas formées avec cette texture.

La pérennité des marquages selon l'invention est améliorée grâce notamment au fait que les surfaces planes visibles par un observateur regardant la surface de l'article pourvu dudit marquage sont sensiblement réduites.

Par ailleurs, on sait que certains des éléments chimiques rentrant dans la composition des mélanges de caoutchouc, notamment ceux employés pour les pneumatiques, peuvent migrer vers les surfaces extérieures et venir tacher ces surfaces, Grâce au marquage selon l'invention, l'impact de cette migration sur l'altération du marquage est limité, puisque, sans empêcher en tant que telle la migration, les surfaces étant relativement très inclinées par rapport à la surface moyenne du pneumatique, ces taches n'altèrent pas la perception visuelle des flancs, ce qui assure effectivement une plus grande pérennité audit marquage.

Ce qui a été présenté pour les flancs d'un pneumatique s'applique de façon semblable à d'autres parties visibles du pneumatique. Un pneumatique comprend notamment une bande de roulement pourvue d'une surface de roulage 121 (comme cela est visible sur la même figure 5) pour venir en contact avec la chaussée pendant le roulage dudit pneumatique, cette surface de roulage comprend en règle générale une sculpture formée par une pluralité d'éléments en relief 123 séparés les uns des autres par des rainures 122. Le marquage selon l'invention peut être réalisé sur la surface de roulement 121 ou sur une partie de ladite surface (par exemple uniquement sur les parois 130 des rainures 122).

L'invention n'est pas limitée aux exemples décrits et représentés et diverses modifications peuvent y être apportées sans sortir de son cadre. Notamment les brins peuvent prendre la forme de nervures c'est-à-dire de brins présentant une deuxième dimension au moins égale à deux fois la hauteur desdits brins. Cette dernière variante présente la particularité d'offrir une direction privilégiée selon laquelle le motif présente des différences de contraste et donc de visibilité selon la direction d'observation.

Ce qui a été présenté avec une couleur unique correspondant à celle de l'article peut aisément s'appliquer à la formation d'un marquage d'au moins une couleur différente de celle de l'article.

Enfin, en ce qui concerne le procédé de marquage il est possible, mais en général beaucoup plus coûteux, de réaliser directement sur le pneumatique les brins selon dimension et arrangement voulus par exemple au moyen de laser enlevant progressivement de la matière.

Dans une autre variante intéressante, le marquage selon l'invention est réalisé de manière à ce que les extrémités des brins affleurent la surface de l'article ou sont en retrait par rapport à la surface de l'article dans une sorte de logement réalisé sur la surface de l'article. Ainsi, il est possible d'avoir l'effet du marquage selon l'invention tout en limitant les effets sur ledit marquage d'un frottement de la surface de l'article contre un autre objet. Cette dernière variante peut être obtenue en formant sur la surface de moulage d'un moule une pluralité de protubérances ayant une section moyenne comprise entre 0,003 et 0,06 mm² et selon au moins une densité de protubérances au moins égale à cinq protubérances par unité de surface exprimée en millimètre carré (mm²). Au cours du moulage d'un article dans ce moule, une pluralité de puits sont moulés sur la surface dudit article. Les parties de matière entre les puits sont équivalentes aux brins des variantes précédemment présentées et il est ainsi possible d'avoir un motif à très fort contraste sur la surface de l'article moulé.

## Revendications

1. Pneumatique (100) en matériau caoutchoutique, ce pneumatique comprenant une surface (11) visible comprenant, sur au moins une partie de cette surface, un motif (2) faisant contraste par rapport à la surface du pneu , ce motif (2) comprenant une pluralité de brins (201) répartis sur la totalité dudit motif, chaque brin (201) ayant une section moyenne comprise entre 0,003 et 0,06 mm², ce motif étant **caractérisé en ce que** la densité des brins (201) sur la surface du motif est au moins égale à cinq brins par unité de surface exprimée en millimètre carré (mm²), et **en ce que** la géométrie de section des brins est polygonale, lesdits brins ayant des bases sur la surface du pneu qui sont en contact entre elles de manière à réduire les surfaces résiduelles entre lesdits brins.

2. Pneu (1) selon la revendication 1 **caractérisé en ce que** la densité des brins (201) sur la surface du motif est au moins égale à quinze brins par unité de surface exprimée en millimètre carré (mm²)_{.}

3. Pneu (1) selon la revendication 1 ou la revendication 2 **caractérisé en ce que** la hauteur moyenne des brins (201) est au moins égale à 0,1 mm.

4. Pneu (1) selon l'une quelconque des revendications 1 à 3 **caractérisé en ce que** la section de chaque brin (201) diminue en allant de la base du brin vers l'extrémité dudit brin.

5. Pneu (1) selon l'une des revendications 1 à 4 **caractérisé en ce que** l'extrémité (22) des brins (201) a une forme non plane.

6. Pneu (1) selon l'une quelconque des revendications 1 à 5 **caractérisé en ce que** le motif comprend des brins de différentes hauteurs et de forme diverses disposés selon des densités appropriées pour obtenir des variations de contraste.

7. Pneumatique (100) selon l'une des revendications 1 à 6 **caractérisé en ce qu'**il comprend une surface de roulage (121) pour venir en contact avec la chaussée pendant le roulage dudit pneumatique, cette surface de roulage comprenant une sculpture formée par une pluralité d'éléments en relief (123) séparés les uns des autres par des rainures (122), ce pneumatique étant **caractérisé en ce que** le motif de contraste élevé est formé sur au moins une partie des éléments de relief (123).

8. Pneumatique (100) selon la revendication 7 **caractérisé en ce que** le motif de contraste élevé est réalisé sur au moins les parties (130) de matériaux délimitant les rainures (122) dans le but d'obtenir une plus grande visibilité de la sculpture du pneumatique.

9. Procédé de moulage pour former un motif de contraste élevé sur une surface d'un pneu en matériau caoutchoutique moulable dans un moule (10), ce procédé consistant à réaliser, à l'emplacement du motif (20) sur la surface du moule (110), une pluralité de cavités (210) de section moyenne comprise entre 0,003 et 0,06 mm², avec une densité de cavités (210) au moins égale à cinq cavités par unité de surface de moule exprimée en mm², lesdites cavités ayant une profondeur au moins égale à 0,1 mm, et en ce que la géométrie de section des cavités est polygonale, lesdites cavités ayant des bases sur la surface du moule qui sont en contact entre elles de manière à réduire les surfaces résiduelles entre lesdites cavités

10. Procédé de moulage selon la revendication 12 **caractérisé en ce que** la réalisation des cavités (210) sur le moule est obtenu au moyen d'un faisceau laser.

11. Procédé de moulage pour former un motif de contraste élevé sur une surface d'un pneu en matériau caoutchoutique moulable dans un moule (10), ce procédé consistant à réaliser, à l'emplacement du motif (20) sur la surface du moule (110), une pluralité de protubérances de section moyenne comprise entre 0,003 et 0,06 mm², avec une densité de protubérances au moins égale à cinq protubérances par unité de surface de moule exprimée en mm², la géométrie de section des protubérances est polygonale, lesdites protubérances ayant des bases sur la surface du moule qui sont en contact entre elles de manière à réduire les surfaces résiduelles entre lesdites protubérances.

## Claims

1. A tyre (100)made of rubber, this tyre having at least one visible surface (11), this surface comprising on at least part of it a pattern (2) contrasting with the surface of the article, this pattern (2) comprising a plurality of tufts (21) distributed over the entire said pattern, each tuft (21) having an average cross section between 0.003 and 0.06 mm², this pattern being **characterized in that** the density of the tufts (21) on the surface of the pattern is at least five tufts per unit area expressed in square millimetres (mm²), and wherein the cross-sectional geometry of the tufts is polygonal, said tufts having bases on the surface of the article which are in contact with each other so as to reduce the surfaces remaining between said tufts.

2. Tyre (100) according to Claim 1, **characterized in that** the density of the tufts (201) on the surface of the pattern is at least equal to fifteen tufts per unit area expressed in square millimetres (mm²).

3. Tyre (100) according to Claim 1 or Claim 2, **characterized in that** the average height of the tufts (201) is at least 0.1 mm.

4. Tyre (100) according to any one of Claims 1 to 3, **characterized in that** the cross section of each tuft (201) decreases from the base of the tuft to the tip of said tuft.

5. Tyre (100) according to one of Claims 1 to 4, **characterized in that** the tip (22) of the tufts (201) has a non-flat shape.

6. Tyre (100) according to any one of Claims 1 to 5, **characterized in that** the pattern comprises tufts of various heights and of diverse shapes arranged with appropriate densities in order to obtain variations in contrast.

7. Tyre (100) according to any one of Claims 1 to 6, **characterized in that** said article is a tyre (100) made of rubber material, this tyre having a visible surface (110) comprising, on at least part of this surface, a pattern comprising a plurality of tufts (201) made of rubber material of the same type as the tyre, so as to accentuate the visibility of said pattern.

8. Tyre (100) according to Claim 7, **characterized in that** it comprises a rolling surface (121) for coming into contact with the road while said tyre is rolling thereon, this rolling surface comprising a tread design formed by a plurality of relief elements (123) separated from one another by grooves (122), this tyre being **characterized in that** the high-contrast pattern is formed on at least part of the relief elements (123).

9. Moulding process for forming a high-contrast pattern on a surface of a rubber tyre that can be moulded in a mould (10), this process consisting in producing, at the position of the pattern (20) on the surface of the mould (110), a plurality of cavities (210) of average cross section between 0.003 and 0.06 mm², with a density of cavities (210) of at least five cavities per unit area of mould, expressed in mm², said cavities having a depth of at least 0.1 mm.

10. Moulding process according to Claim 9, **characterized in that** the cavities (210) are produced on the mould by means of a laser beam.

11. Moulding process for forming a high-contrast pattern on a surface of a rubber tyre that can be moulded in a mould (10), this process consisting in producing, at the position of the pattern (20) on the surface of the mould (110), a plurality of protuberances of average cross section between 0.003 and 0.06 mm² with a density of protuberances of at least five protuberances per unit area of mould, expressed in mm².

## Patentansprüche

1. Luftreifen (100) aus Kautschukmaterial, wobei dieser Luftreifen eine sichtbare Fläche (11) enthält, die mindestens auf einem Teil dieser Fläche ein Muster (2) enthält, das einen Kontrast zur Fläche des Luftreifens bildet, wobei dieses Muster (2) eine Vielzahl von Fasern (201) enthält, die über das ganze Muster verteilt sind, wobei jede Faser (201) einen mittleren Querschnitt zwischen 0,003 und 0,06 mm² hat, wobei dieses Muster **dadurch gekennzeichnet ist, dass** die Dichte der Fasern (201) auf der Fläche des Musters mindestens gleich fünf Fasern pro Flächeneinheit ausgedrückt in Quadratmillimeter (mm²) ist, und dass die Querschnittsgeometrie der Fasern polygonal ist, wobei die Fasern Basen auf der Fläche des Luftreifens haben, die miteinander in Kontakt sind, um die Restflächen zwischen den Fasern zu reduzieren.

2. Luftreifen (100) nach Anspruch 1, **dadurch gekennzeichnet, dass** die Dichte der Fasern (201) auf der Fläche des Musters mindestens gleich fünfzehn Fasern pro Flächeneinheit ausgedrückt in Quadratmillimeter (mm²) ist.

3. Luftreifen (100) nach Anspruch 1 oder Anspruch 2, **dadurch gekennzeichnet, dass** die mittlere Höhe der Fasern (201) mindestens gleich 0,1 mm ist.

4. Luftreifen (100) nach einem der Ansprüche 1 bis 3, **dadurch gekennzeichnet, dass** der Querschnitt jeder Faser (201) von der Basis der Faser bis zum Ende der Faser abnimmt.

5. Luftreifen (100) nach einem der Ansprüche 1 bis 4, **dadurch gekennzeichnet, dass** das Ende (22) der Fasern (201) eine nicht ebene Form hat.

6. Luftreifen (100) nach einem der Ansprüche 1 bis 5, **dadurch gekennzeichnet, dass** das Muster Fasern unterschiedlicher Höhen und verschiedener Form enthält, die gemäß geeigneten Dichten angeordnet sind, um Kontrastvariationen zu erhalten.

7. Luftreifen (100) nach einem der Ansprüche 1 bis 6, **dadurch gekennzeichnet, dass** er eine Rollfläche (121) enthält, um während des Rollens des Luftreifens mit der Straße in Kontakt zu kommen, wobei diese Rollfläche ein Profil enthält, das von einer Vielzahl von reliefartig vorstehenden Elementen (123) geformt wird, die durch Rillen (122) voneinander getrennt sind, wobei dieser Luftreifen **dadurch gekennzeichnet ist, dass** das Muster mit hohem Kontrast auf mindestens einem Teil der Reliefelemente (123) geformt ist.

8. Luftreifen (100) nach Anspruch 7, **dadurch gekennzeichnet, dass** das Muster mit hohem Kontrast auf mindestens den Bereichen (130) von Materialien hergestellt wird, die die Rillen (122) begrenzen, um eine größere Sichtbarkeit des Profils des Luftreifens zu erhalten.

9. Formgebungsverfahren, um ein Muster mit hohem Kontrast auf einer Fläche eines Luftreifens aus in einem Formwerkzeug (10) formbarem Kautschukmaterial zu formen, wobei dieses Verfahren darin besteht, an der Stelle des Musters (20) auf der Fläche (110) des Formwerkzeugs eine Vielzahl von Hohlräumen (210) mit einem mittleren Querschnitt zwischen 0,003 und 0,06 mm² herzustellen, mit einer Dichte an Hohlräumen (210) mindestens gleich fünf Hohlräumen pro Formwerkzeug-Flächeneinheit ausgedrückt in mm², wobei die Hohlräume eine Tiefe mindestens gleich 0,1 mm haben, und dass die Querschnittsgeometrie der Hohlräume polygonal ist, wobei die Hohlräume Basen an der Oberfläche des Formwerkzeugs haben, die miteinander in Kontakt stehen, um die Restflächen zwischen den Hohlräumen zu reduzieren.

10. Formgebungsverfahren nach Anspruch 12, **dadurch gekennzeichnet, dass** die Herstellung der Hohlräume (210) auf dem Formwerkzeug mittels eines Laserstrahls erhalten wird.

11. Formgebungsverfahren, um ein Muster mit hohem Kontrast auf einer Fläche eines Luftreifens aus in einem Formwerkzeug (10) formbarem Kautschukmaterial zu formen, wobei dieses Verfahren darin besteht, an der Stelle des Musters (20) auf der Fläche (110) des Formwerkzeugs eine Vielzahl von Vorsprüngen mit einem mittleren Querschnitt zwischen 0,003 und 0,06 mm² zu formen, mit einer Dichte an Vorsprüngen mindestens gleich fünf Vorsprüngen pro Formwerkzeug-Flächeneinheit ausgedrückt in mm², wobei die Querschnittsgeometrie der Vorsprünge polygonal ist, wobei die Vorsprünge Basen an der Oberfläche des Formwerkzeugs haben, die miteinander in Kontakt stehen, um die Restflächen zwischen den Vorsprüngen zu reduzieren.
